# EUROPÄISCHE PATENTSCHRIFT

(11) **EP 1 371 454 B1**
(45) Veröffentlichungstag und Bekanntmachung des Hinweises auf die Patenterteilung: **23.11.2005**
(21) Anmeldenummer: 03010738.7
(22) Anmeldetag: 14.05.2003
(51) Int. Cl.: B25B 15/00, B25F 1/02, H02G 1/12

(54) **Schraubendreher mit einem Zusatzwerkzeug**
Screwdriver with an additional tool
Tournevis avec un outil additionnel

(30) Priorität: 11.06.2002 DE 20209058 U
(43) Veröffentlichungstag der Anmeldung: 17.12.2003
(73) Patentinhaber: Weidmüller Interface GmbH & Co., 32760 Detmold (DE)
(72) Erfinder: Heggemann, Christian, 32758 Detmold (DE)
(74) Vertreter: Dantz, Jan Henning

(56) Entgegenhaltungen:
- DE-A- 4 301 764
- DE-U- 29 722 355
- GB-A- 581 618
- US-A- 5 894 617

## Beschreibung

Die Erfindung betrifft einen Schraubendreher mit einem Schaft und einem Handgriff sowie einem als Abisoliervorrichtung ausgebildeten Zusatzwerkzeug.

Ein Multifunktionswerkzeug mit einem Schraubendreherteil und einem Abisolierwerkzeug ist aus der DE 43 01 7894 A1 bekannt. Diese Schrift ist insoweit gattungsgemäß.

Eine Abisolierzange zeigt die GB 581,618.

Bei Elektroinstallationen ist ein Schraubendreher ein viel benötigtes Werkzeug. Es werden aber auch weitere Werkzeuge benötigt, beispielsweise solche, mit denen elektrisch leitende Kabel durchtrennt werden können und auch solche, mit denen ein Teil des Isoliermantels von elektrisch leitenden Kabeln entfernt werden kann.

Aus der DE 297 22 355 U1 ist ein Schraubendreher bekannt geworden, bei dem innerhalb des Handgriffes ein als Abisoliervorrichtung ausgebildetes Zusatzwerkzeug integriert ist. Dabei ist der Handgriff mit einer Aussparung versehen, in die ein entgegen der Wirkung von Federn betätigbares Druckstück eingesetzt ist. Im Grund der Aussparung einerseits sowie an der gegenüber liegenden Seite des Druckstückes andererseits sind Mittel vorgesehen, die das Abisolieren von elektrisch leitenden Kabeln ermöglichen.

Eine derartige Konstruktion ist vergleichsweise aufwendig und beeinträchtigt unmittelbar die Gestaltung des Handgriffes. Außerdem wird dessen Handhabbarkeit bei Nutzung des Werkzeuges als Schraubendreher durch das integrierte Zusatzwerkzeug negativ beeinflußt.

Der vorliegenden Erfindung liegt die Aufgabe zugrunde, einen Schraubendreher der gattungsgemäßen Art zu schaffen, der sich durch einen einfachen und unkomplizierten Aufbau und durch eine ebenso einfache und unkomplizierte Handhabung bei der Nutzung sämtlicher Funktionen auszeichnet.

Diese Aufgabe wird erfindungsgemäß durch den Gegenstand des Anspruchs 1 gelöst.

Das Zusatzwerkzeug kann an jedem vorhandenen Schraubendreher nachträglich angebracht werden oder, falls dies erwünscht oder notwendig ist, zeitweise auch vom Schraubendreher abgenommen werden.

Die zusätzliche Abisoliervorrichtung beeinträchtigt zunächst einmal nicht die Gestaltung des Handgriffes des Schraubendrehers, so daß auch dessen Handhabung bei Nutzung des Kombi-Werkzeuges als Schraubendreher nicht negativ beeinträchtigt wird.

Die Betätigung des Zusatzwerkzeuges erfolgt einfach und unkompliziert durch Betätigung des am Klemmstückaufsatz schwenkbar gelagerten Hebels.

Eine Weiterbildung der Erfindung besteht darin, daß die Abisoliervorrichtung mehrere, für unterschiedliche Kabeldurchmesser einsetzbare Arbeitsstationen aufweist. Hierdurch wird der Einsatzbereich des Zusatzwerkzeuges in einfacher Art und Weise erhöht.

Der gleiche Vorteil kann erzielt werden, wenn die Abisoliervorrichtung lediglich eine, aber auf verschiedene Kabeldurchmesser einstellbare Arbeitsstation aufweist.

Eine weitere, vorteilhafte Ausführungsform sieht vor, daß am Klemmstückaufsatz und am Hebel jeweils mehrere, miteinander korrespondierende und halbkreisförmige Aussparungen mit unterschiedlichen Durchmessern vorgesehen sind.

Diese die Arbeitsstationen der Abisoliervorrichtung bildenden Aussparungen können auf gängige Kabeldurchmesser ausgelegt sein.

Sofern die Abisoliervorrichtung nur eine Arbeitsstation aufweist, ist es zweckmäßig, wenn sowohl am Klemmstückaufsatz wie auch am Hebel jeweils eine muldenförmige Aussparung vorgesehen und der Schwenkwinkel des Hebels durch eine Einstellvorrichtung begrenzt ist, so daß die wirksame Größe der Arbeitsstation stufenlos einstellbar ist.

Weitere Merkmale der Erfindung sind Gegenstand weiterer Unteransprüche.

Ausführungsbeispiele der Erfindung sind in den beigefügten Zeichnungen dargestellt und werden im folgenden näher beschrieben.

Es zeigen:
- Figur 1: eine Ansicht eines erfindungsgemäßen Schraubendrehers mit integrierter Abisoliervorrichtung in Wirkstellung,
- Figur 2: eine der Figur 1 entsprechende Ansicht bei geöffneter Abisoliervorrichtung,
- Figur 3: eine Ansicht eines Schraubendrehers nach einem weiteren Ausführungsbeispiel der Erfindung mit in Wirkstellung befindlicher Abisoliervorrichtung,
- Figur 4: eine Ansicht des Schraubendrehers nach Figur 3 bei geöffneter Abisoliervorrichtung.

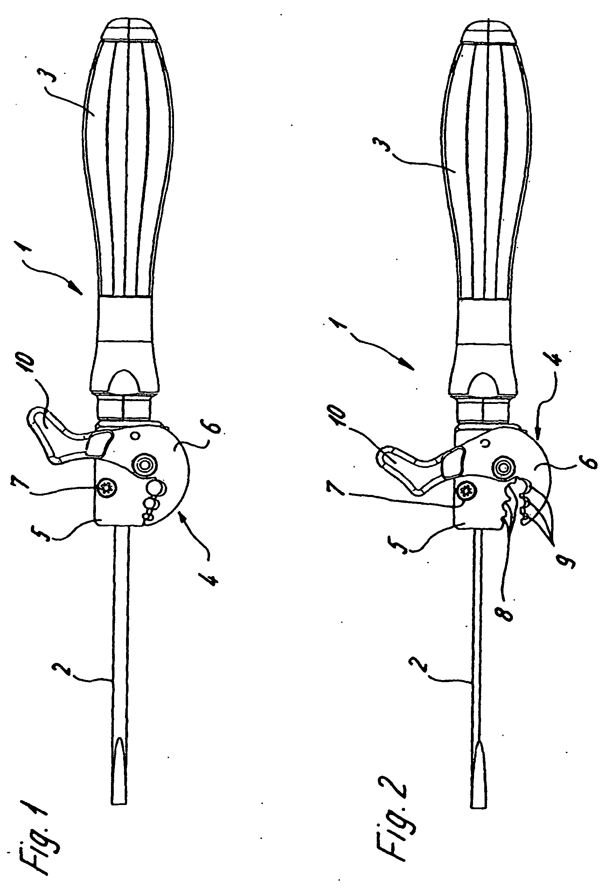

In den Figuren 1 und 2 ist mit dem Bezugszeichen 1 jeweils insgesamt ein Schraubendreher bezeichnet, der einen Schaft 2, einen Handgriff 3 sowie ein als Abisoliervorrichtung 4 ausgebildetes Zusatzwerkzeug aufweist.

Wie die Zeichnungen deutlich erkennen lassen, besteht die Abisoliervorrichtung 4 im wesentlichen aus einem Klemmstückaufsatz 5 und einem daran schwenkbar gelagerten Hebel 6. Der Klemmstückaufsatz 5 ist auf den Schaft 2 des Schraubendrehers 1 aufgeschoben und beispielsweise durch eine Klemmschraube 7 gegenüber dem Schaft 2 festgelegt.

Die zur Abisolierung von elektrisch leitenden Kabeln nutzbare Abisoliervorrichtung 4 weist beim Ausführungsbeispiel gemäß den Figuren 1 und 2 mehrere Arbeitsstationen auf, die durch Aussparungen, 8 bzw. 9 am Klemmstückaufsatz 5 einerseits sowie am Hebel 6 andererseits gebildet sind. Die Aussparungen 8 bzw. 9 sind beim Ausführungsbeispiel nach den Figuren 1 und 2 halbkreisförmig gestaltet und weisen verschiedene Durchmesser auf. Die Aussparungen 8 bzw. 9 mit den jeweils unterschiedlichen Durchmessern liegen bei in Wirkstellung befindlichem Hebel (siehe Figur 1) einander gegenüber und bilden die erwähnten Arbeitsstationen, innerhalb derer Kabel unterschiedlicher Durchmesser abisoliert werden können.

Zur Betätigung der Abisoliervorrichtung 4 wird der Hebel 6 über ein Griffstück 10 betätigt. Dieses Griffstück 10 kann zur Verbesserung der Handhabbarkeit als Kunststofformteil ausgebildet und auf den aus Metall gefertigten Hebel 6 aufgeschoben sein.

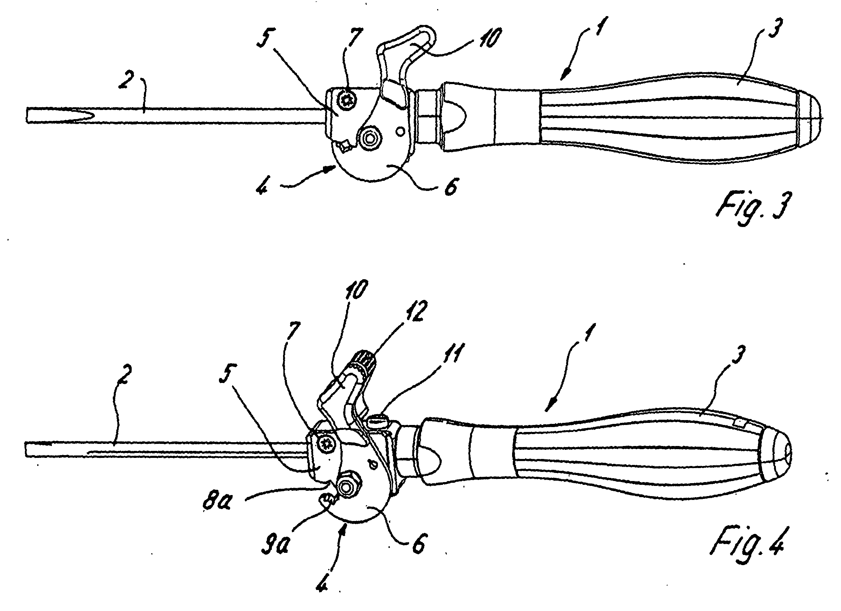

Das in den Figuren 3 und 4 dargestellte Ausführungsbeispiel der Erfindung unterscheidet sich von der oben beschriebenen Ausführungsform lediglich dadurch, daß die Abisoliervorrichtung 4 lediglich eine Arbeitsstation aufweist, die durch zwei muldenartige Aussparungen 8a und 9a am Klemmstückaufsatz 5 einerseits sowie am Hebel 6 andererseits vorgesehen sind. Diese muldenartigen Aussparungen 8a und 9a sind vorteilhafterweise V-förmig gestaltet mit bevorzugt rechtwinkligem Verlauf.

Durch eine am Klemmstückaufsatz 5 angebrachte und im Schwenkweg des Hebels 6 liegende Einstellschraube 11 kann der maximale Schwenkweg des Hebels 6 begrenzt werden und somit der maximale Abstand zwischen den beiden Aussparungen 8a und 9a vorbestimmt werden. Hierdurch ist eine Anpassung der Arbeitsstation zum Abisolieren eines elektrisch leitenden Kabels an unterschiedlich große Durchmesser von elektrisch leitenden Kabeln möglich.

Figur 4 zeigt besonders anschaulich, daß das auf den Hebel 6 aufgeschobene Griffstück 10 eine deutlich größere Breite als der Hebel 6 selbst aufweist, wodurch unter anderem die Verbesserung bei der Handhabung des Hebels 6 erzielt wird.

Das Griffstück 10 kann auch in seinem Betätigungsbereich mit Rippen 12 oder anders gearteten Aufrauhungen zur Verbesserung der Griffigkeit ausgestattet sein.

Da die Abisoliervorrichtung 4 auf dem Schaft 2 des Schraubendrehers 1 festgelegt ist, wird die Gestaltung des Handgriffes 3 des Schraubendrehers 1 in keiner Weise beeinträchtigt, so daß die normale Funktion des gesamten Werkzeuges als Schraubendreher uneingeschränkt erhalten bleibt.

Sollte in bestimmten Anwendungsfällen die auf dem Schaft 2 festgelegte Abisoliervorrichtung 4 als störend empfunden werden, kann diese vorübergehend auch problemlos vom Schraubendreher 1 im übrigen abgenommen werden. Hierfür ist lediglich die Klemmschraube 7 zu lösen, anschließend kann die Abisoliervorrichtung 4 vom Schaft 2 abgezogen werden.

Die Aussparungen 8, 8a, 9 und 9a können vorteilhafterweise mit Schneiden ausgestattet oder in ihrem Wirkbereich selbst schneidenartig ausgebildet sein, um das Durchtrennen der Isolierung eines abzuisolierenden Elektrokabels zu erleichtern.

## Patentansprüche

1. Schraubendreher (1) mit
a) einem Schaft (2),
b) einem Handgriff (3),
c) einem als Abisoliervorrichtung (4) ausgebildeten Zusatzwerkzeug,
**dadurch gekennzeichnet, daß**
d) die Abisoliervorrichtung (4) aus einem auf den Schaft (2) aufgeschobenen und lösbar am Schaft festgelegten Klemmstückaufsatz (5) mit einem am Klenunstückaufsatz schwenkbar gelagerten Hebel (6) besteht, so dass der Klemmstückaufsatz an dem Schaft des Schraubendrehers nachträglich anbringbar und von diesem abnehmbar ist,
und
e) der Klemmstückaufsatz (5) einerseits und der Hebel (6) andererseits mindestens eine Aussparung (8, 8a, 9, 9a) aufweisen und die Aussparungen (8, 8a, 9, 9a) in Wirkstellung einander gegenüber liegen.

2. Schraubendreher nach Anspruch 1, **dadurch gekennzeichnet, daß** die Abisoliervorrichtung (4) mehrere, für unterschiedliche Kabeldurchmesser einsetzbare Arbeitsstationen aufweist.

3. Schraubendreher nach Anspruch 1, **dadurch gekennzeichnet, daß** die Abisoliervorrichtung (4) lediglich eine, aber auf verschiedene Kabeldurchmesser einstellbare Arbeitsstation aufweist.

4. Schraubendreher nach Anspruch 2, **dadurch gekennzeichnet, daß** am Klemmstückaufsatz (5) und am Hebel (6) jeweils mehrere, miteinander korrespondierende und halbkreisförmige Aussparungen (8, 9) mit unterschiedlichen Durchmessern vorgesehen sind.

5. Schraubendreher nach Anspruch 3, **dadurch gekennzeichnet, daß** sowohl am Klemmstückaufsatz (5) wie auch am Hebel (6) jeweils eine muldenförmige Aussparung (8a, 9a) vorgesehen und der Schwenkwinkel des Hebels (6) durch eine Einstellvorrichtung begrenzt ist, so daß die wirksame Größe der Arbeitsstation stufenlos einstellbar ist.

6. Schraubendreher nach einem oder mehreren der vorhergehenden Ansprüche, **dadurch gekennzeichnet, daß** die Aussparungen (8, 8a, 9, 9a) mit Schneiden ausgestattet oder in ihrem Wirkbereich schneidenartig ausgebildet sind.

7. Schraubendreher nach einem oder mehreren der vorhergehenden Ansprüche, **dadurch gekennzeichnet, daß** auf den Hebel (6) an seinem den Aussparungen (9, 9a) gegenüber liegenden Ende ein Griffstück (10) aufgeschoben ist.

8. Schraubendreher nach Anspruch 7, **dadurch gekennzeichnet, daß** das Griffstück (10) als Kunststofformteil ausgebildet ist.

9. Schraubendreher nach Anspruch 7 oder 8, **dadurch gekennzeichnet, daß** das Griffstück (10) breiter ausgebildet ist als der Hebel (6).

10. Schraubendreher nach einem oder mehreren der Ansprüche 7 bis 10, **dadurch gekennzeichnet, daß** das Griffstück (10) in seinem Betätigungsbereich mit Rippen (12) oder anderen, die Handhabbarkeit verbessernden Aufrauhungen versehen ist.

11. Schraubendreher nach einem der vorstehenden Ansprüche, **dadurch gekennzeichnet, daß** der Klemmstückaufsatz (5) mittels einer Klemm- oder Befestigungsschraube (7) lösbar am Schaft festgelegt ist.

## Claims

1. Screwdriver (1) with
a) a shaft (2),
b) a handle (3),
c) an additional tool in the form of an insulation stripper (4),
**characterised in that**
d) the insulation stripper (4) consists of a clamp attachment (5) pushed onto the shaft (2) and releasably fixed to the shaft with a lever (6) mounted so as to be pivotable on the clamp attachment so that the clamp attachment can be retrofitted on the shaft of the screwdriver and can be removed from it, and
e) the clamp attachment (5), on the one hand, and the lever (6), on the other hand, have at least one cut-out (8, 8a, 9, 9a) and the cut-outs (8, 8a, 9, 9a) lie opposite one another in the active position.

2. Screwdriver as claimed in claim 1, **characterised in that** the insulation stripper (4) has several work stations which can be used for different cable diameters.

3. Screwdriver as claimed in claim 1, **characterised in that** the insulation stripper (4) has only one work station but it can be adjusted to cater for different cable diameters.

4. Screwdriver as claimed in claim 2, **characterised in that** several semi-circular, mutually co-operating cut-outs (8, 9) of differing diameters are provided on the clamp attachment (5) and on the lever (6),

5. Screwdriver as claimed in claim 3, **characterised in that** a notch-shaped cut-out (8a, 9a) is provided respectively on both the clamp attachment (5) and the lever (6) and the pivot angle of the lever (6) is restricted by an adjusting mechanism so that the effective size of the workstation can be steplessly adjusted.

6. Screwdriver as claimed in one or more of the preceding claims, **characterised in that** the cut-outs (8, 8a, 9, 9a) are fitted with blades or are of a blade-type design in their working region.

7. Screwdriver as claimed in one or more of the preceding claims, **characterised in that** a gripping piece (10) is pushed onto the lever (6) at its end lying opposite the cut-outs (9, 9a).

8. Screwdriver as claimed in claim 7, **characterised in that** the gripping piece (10) is a plastic moulded part.

9. Screwdriver as claimed in claim 7 or 8, **characterised in that** the gripping piece (10) is wider than the lever (6).

10. Screwdriver as claimed in one or more of claims 7 to 10, **characterised in that** the gripping piece (10) is provided with ribs (12) or other roughening on its operating region to improve handling.

11. Screwdriver as claimed in one of the preceding claims, **characterised in that** the clamp attachment (5) is releasably secured on the shaft by means of a clamping or fixing screw (7).

## Revendications

1. Tournevis (1) avec
a) une tige (2),
b) une poignée (3),
c) un outil additionnel conçu sous la forme d'un dispositif de dénudation (4)
**caractérisé en ce que**
d) le dispositif de dénudation (4) est composé d'une pièce rapportée de blocage (5) enfilée sur la tige (2) et fixée de façon amovible sur la tige, avec un levier (6) logé de façon pivotante sur la pièce rapportée de blocage, pour que la pièce rapportée de blocage puisse être montée et retirée ultérieurement de la tige du tournevis, et
e) la pièce rapportée de blocage (5) d'une part et le levier (6) d'autre part comportent au moins un évidement (8, 8a, 9, 9a) et ces évidements (8, 8a, 9, 9a) se font face en position d'interaction.

2. Tournevis selon la revendication 1, **caractérisé en ce que** le dispositif de dénudation (4) comporte plusieurs postes de travail pouvant être utilisés pour différents diamètres de câbles.

3. Tournevis selon la revendication 1, **caractérisé en ce que** le dispositif de dénudation (4) ne comporte qu'un seul poste de travail, mais réglable pour différents diamètres de câbles

4. Tournevis selon la revendication 2, **caractérisé en ce que** respectivement plusieurs évidements (8, 9) en forme de demi-cercles, de différents diamètres et se correspondant mutuellement sont prévus sur la pièce rapportée de blocage (5) et sur le levier (6).

5. Tournevis selon la revendication 3, **caractérisé en ce qu'**un évidement en forme d'auge (8a, 9a) est prévu respectivement sur la pièce rapportée de blocage (5), ainsi que sur le levier (6) et **en ce que** l'angle de pivotement du levier (6) est délimité par un dispositif de réglage, ce qui permet de régler directement la dimension utile du poste de travail.

6. Tournevis selon l'une quelconque des revendications précédentes, **caractérisé en ce que** les évidements (8, 8a, 9, 9a) sont équipés de lames ou sont conçus sous la forme de lames dans leur zone d'action.

7. Tournevis selon l'une quelconque des revendications précédentes, **caractérisé en** en ce qu'un élément de préhension (10) est prévu sur le levier (6), sur son extrémité opposée aux évidements (9, 9a).

8. Tournevis selon la revendication 7, **caractérisé en ce que** l'élément de préhension (10) est conçu sous forme de pièce moulée en matière plastique.

9. Tournevis selon la revendication 7 ou 8, **caractérisé en ce que** l'élément de préhension (10) est conçu de façon plus large que le levier (6).

10. Tournevis selon l'une quelconque des revendications 7 à 10, **caractérisé en ce que** dans son secteur d'actionnement, l'élément de préhension (10) est muni de nervures (12) ou autres grainages, améliorant la facilité de prise en main.

11. Tournevis selon l'une quelconque des revendications précédentes, **caractérisé en ce que** la pièce rapportée de blocage (5) est fixée de façon amovible sur la tige à l'aide d'une vis de d'arrêt ou d'une vis de fixation (7).
